# EUROPÄISCHE PATENTSCHRIFT

(11) **EP 2 054 248 B1**
(45) Veröffentlichungstag und Bekanntmachung des Hinweises auf die Patenterteilung: **22.01.2014**
(21) Anmeldenummer: 07801550.0
(22) Anmeldetag: 08.08.2007
(51) Int. Cl.: B60G 17/016, B60G 17/019, B60G 21/055

(54) **AKTIVER, GETEILTER KRAFTFAHRZEUGSTABILISATOR MIT EINGEBAUTEM SCHWENKMOTOR**
ACTIVE, DIVIDED STABILIZER FOR A MOTOR VEHICLE, COMPRISING AN INTEGRATED SWIVEL MOTOR
STABILISATEUR ACTIF SEGMENTÉ POUR VÉHICULE À MOTEUR, COMPRENANT UN MOTEUR OSCILLANT INTÉGRÉ

(30) Priorität: 26.08.2006 DE 102006040109
(43) Veröffentlichungstag der Anmeldung: 06.05.2009
(73) Patentinhaber: Bayerische Motoren Werke Aktiengesellschaft, 80809 München (DE)
(72) Erfinder: GRIESHABER, Martin, 80999 München (DE); SIMKOVICS, Reinhard, 85356 Freising (DE); SPIELMANN, Michael, 85757 Karlsfeld (DE)
(86) Internationale Anmeldenummer: PCT/EP2007/007005
(87) Internationale Veröffentlichungsnummer: WO 2008/025442

(56) Entgegenhaltungen:
- EP-A- 1 679 208
- WO-A-2004/085179
- WO-A-2005/077685
- WO-A-2007/003279
- DE-A1- 19 846 275
- JP-A- 63 145 118

## Beschreibung

Die Erfindung betrifft einen aktiven, geteilten Stabilisator für ein Kraftfahrzeug mit einem eingebauten Schwenkmotor nach dem Oberbegriff des ersten Anspruchs.

Es ist bereits bekannt, einen Kraftfahrzeugstabilisator in ein erstes, der Aufhängung des linken Rades einer Fahrzeug-Achse zugeordnetes Stabilisatorteil und in ein zweites, der Aufhängung des rechten Rades dieser Fahrzeug-Achse zugeordnetes Stabilisatorteil zu unterteilen. Sind diese Stabilisatorteile um deren gemeinsame Längsachse gegeneinander verdrehbar, kann gegenüber Fahrwerken mit einstückigem Stabilisator eine deutlich gesteigerte Wankstabilität erreicht werden, wenn zwischen den beiden Stabilisatorteilen ein geeigneter Schwenkmotor vorgesehen ist, der aufgrund einer geeigneten Ansteuerung diese Stabilisatorteile bedarfsgerecht gegeneinander verdreht.

Ein Schwenkmotor umfasst mindestens einen Motor und ein mechanisches Getriebe. Damit erhält man einen Stabilisator, dessen beide Stabilisatorteile, die durch den Schwenkmotor miteinander verbunden sind, durch diesen gezielt zueinander verdreht werden können, damit ein gewünschtes Stabilisatormoment erzeugt wird, welches dann das Wanken des Fahrzeug-Aufbaus verhindert. Einen solchen Stabilisator beschreibt die DE 198 46 275 A1.

Stabilisatoren für die aktive Roll-Stabilisierung bestehen also aus einer oder mehreren Torsionsfedern mit eingebautem hydraulischem, pneumatischem oder elektromotorischem Aktuator. Für die Realisierung einer Wankstabilisierung ist einerseits das Führungsverhalten des Aktuators und andererseits das Verhalten des Systems gegenüber äußeren Störeinflüssen wesentlich für eine zufrieden stellende Funktion. Der Einfluss einer äußeren Störungsanregung ist vom System aktiv auszuregeln. Dies kann zum Beispiel bei einem hydraulischen Aktuator mittels eines Druckregelventils erfolgen. Dabei erfolgt die Reduzierung des Störeinflusses durch den Ausgleich des Hydraulikdrucks. Ein zum Beispiel verwendbares Proportionalventil kann rein passiv arbeiten, es muss kein aktiver Reglereingriff erfolgen.

Bei elektrischen Wankstabilisierungssystemen, wie zum Beispiel in DE 100 02 455 A1 und in den nach-veröffentlichten DE 10 2005 031 036 A1 und DE 10 2005 031 037 A1 beschrieben, ist für die Reduzierung der Störbeeinflussung ein aktiver Reglereingriff erforderlich. Hierfür ist es notwendig die Störgröße messtechnisch zu erfassen. Bisher ist es bekannt, den Einfluss der Störgröße aus den Signalen von Höhenstandssensoren abzuleiten. In der DE 197 05 809 C2 werden Piezo-Elemente vorgeschlagen.

Für die Ermittlung des Störgrößeneinflusses über Höhenstandssensoren ist der Einsatz von zwei Höhenstandssensoren je Achse vorzuhalten. Nur damit kann der Störeinfluss auf den Stabilisator ermittelt werden, der mittels des Aktuators auszuregeln ist. Die erfassten Signale der Sensoren setzen sich aus der radbezogenen Anregung und der Schwingungsanregung des Aufbaus zusammen. Daraus resultiert eine aufwändige Auswertung der Signale um die einwirkende Störgröße berechnen zu können. Des weiteren werden durch die Störgrößenermittlung hohe Anforderungen an die Genauigkeit und Auflösung der Höhenstandssensoren gestellt.

Aufgabe der Erfindung ist es, diese Nachteile möglichst zu vermeiden.

Die Aufgabe wird mit den Merkmalen des Anspruchs 1 gelöst. Weitere Ausgestaltungen der Erfindung ergeben sich aus den abhängigen Ansprüchen.

Nach der Erfindung ist ein geteilter Kraftfahrzeugstabilisator mit einem eingebauten Schwenkmotor zur Wankregelung, der mindestens aus einem Verstellantrieb aus Motor und Getriebe und aus einem Gehäuse besteht, wobei mindestens ein Gehäuseteil mit einem dazugehörigen Stabilisatorteil zur Drehmomentübertragung so verbunden ist, dass das Gehäuseteil eine axial gerichtete, zentrische Einstülpung besitzt, in die sich das Stabilisatorteil im wesentlichen bis zu deren Ende hinein erstreckt und dass sich dort die Verbindung zur Drehmomentübertragung zwischen dem Gehäuseteil und dem dazu gehörigen Stabilisatorteil befindet, dadurch gekennzeichnet, dass am Gehäuseteil ein Sensor zur Erfassung des Torsionswinkels des Stabilisatorteils angebracht ist, dessen Geber am Stabilisatorteil fixiert ist oder umgekehrt.

Bei einer vorteilhaften Ausführung der Erfindung liefert der Sensor Messwerte, die zur Ansteuerung des Motors, insbesondere über eine Steuereinrichtung, verwendet werden. Dabei ist besonders vorteilhaft, wenn die Steuereinrichtung aus den Messwerten des Sensors, dem am Stabilisatorteil anliegenden Torsionsmoment entsprechende Werte ermittelt.

Eine weitere vorteilhafte Ausführung der Erfindung sieht vor, dass der Motor ein Elektromotor ist.

Eine auf die aktive Roll-Stabilisierung wirkende Störgröße bewirkt eine Änderung des Moments in der passiven Torsionsfeder des Stabilisators. Eine direkte Erfassung des Torsionsmomentes könnte somit direkt als Eingangsgröße für die Ausregelung der auf den Aktuator wirkenden Störgröße herangezogen werden. Dieses Torsionsmoment des passiven Stabilisatorteils könnte mittels konventioneller Drehmomentsensoren, zum Beispiel über Dehnungsmessstreifen, erfasst werden. Die konventionellen Drehmomentsensoren haben jedoch den Nachteil, dass sie entweder eine zu geringe Empfindlichkeit gegenüber dem angreifenden Moment aufweisen oder zu aufwändig und kostenintensiv in der Realisierung sind. Aus diesem Grund wird das zu erfassende Moment über den Torsionswinkel des Stabilisators ermittelt.

Es sind unterschiedliche Sensorprinzipien für die Winkel- bzw. Positionserfassung einsetzbar, nämlich optische, kapazitive, elektromagnetische oder ohm'sche. Für die hier beschriebene Anwendung ist insbesondere eine induktive Positionserfassung einfach und robust realisierbar. Gemessen wird die Positionsänderung des Gebers aufgrund des torsionsmomentbedingten Verdrehwinkels des im Gehäuse eintauchenden Stabilisatorteils.

Dabei ist von Vorteil, dass durch die Erfassung des Verdrehwinkels direkt an der Torsionsfeder eines Stabilisatorteils das Störmoment direkt erfasst wird. Die Aufbereitung des Sensorsignals lässt sich so einfach durchführen. Die Reglerstruktur kann einfach und robust aufgebaut werden. Es wird nur ein Sensor je Achse benötigt. An den Sensor werden moderate Anforderungen hinsichtlich Genauigkeit und Auflösung gestellt. Aus diesem Grund können kostengünstige Sensoren eingesetzt werden. Bei dem verwendeten Messverfahren handelt es sich um ein berührungsloses Prinzip, das hinsichtlich Lebensdauer und Verschleiß als optimal zu bewerten ist.

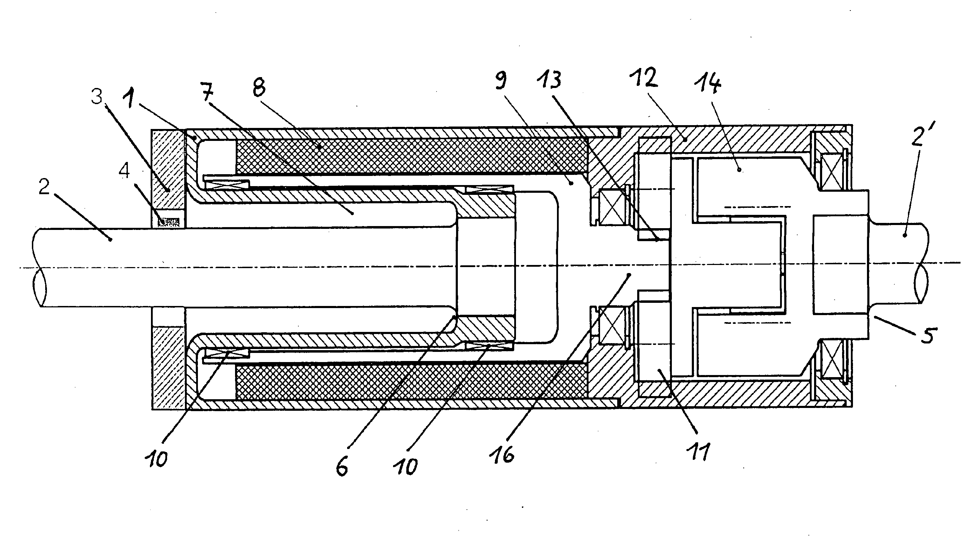

Ein bevorzugtes Ausführungsbeispiel der Erfindung ist in der nachfolgenden Beschreibung und der zugehörigen Zeichnung näher dargestellt. Dazu zeigt die einzige Figur in einer Schnittdarstellung einen erfindungsgemäßen elektrischen Schwenkmotor für einen Kraftfahrzeugstabilisator zum Verdrehen zweier Stabilisatorteile gegeneinander.

Die Figur zeigt einen Schwenkmotor für einen aktiven Stabilisator für ein Kraftfahrzeug, zur Koppelung von zwei nicht gezeichneten Rädern einer Fahrzeugachslinie. Ein erstes Stabilisatorteil 2 ist dem einen Rad zugeordnet und ein zweites Stabilisatorteil 2' ist dem anderen Rad zugeordnet. Die beiden Stabilisatorteile 2, 2' sind gekoppelt durch einen Aktuator, ausgebildet als elektrischer Schwenkmotor, zur Steuerung der Seitenneigung des Kraftfahrzeugs durch Verspannen der Stabilisatorteile 2, 2' gegeneinander. Jedes Stabilisatorteil 2, 2' erstreckt sich von einem dem Schwenkmotor zugeordneten Anschluss 5, 6 zu einem, nicht gezeichneten, dem Rad zugeordneten Anschluss. An einem Gehäuseteil 1 ist das erste Stabilisatorteil 2 und an einem Getriebeabtriebselement das zweite Stabilisatorteil 2' befestigt. Bruchteile der Stabilisatorteile 2, 2' sind in der Figur gezeigt, woraus hervorgeht, dass die Stabilisatorteile 2, 2' im Bereich der Befestigung koaxial zum Schwenkmotor angeordnet sind. Die Drehmomentübertragung auf die Stabilisatorteile 2, 2' erfolgt über eine geeignete Wellen-Nabenverbindung, zum Beispiel eine Verzahnung zwischen dem Gehäuseteil 1 und dem ersten Stabilisatorteil 2, beziehungsweise zwischen dem Getriebeabtriebselement und dem zweiten Stabilisatorteil 2'.

Der Schwenkmotor ist so gestaltet, dass ein Gehäuseteil 1 eine axial gerichtete, zentrische Einstülpung 7 besitzt, in die sich das zugehörige Stabilisatorteil 2 im wesentlichen bis zu deren Ende hinein erstreckt. Dort befindet sich die Verbindung zur Drehmomentübertragung, der Anschluss 6, zwischen dem Gehäuseteil 1 und dem dazu gehörigen Stabilisatorteil 2. Die wirksame Törsionslänge des Stabilisatorteils 2 ist dadurch verlängert, dass dieses in den Schwenkmotor hinein geführt ist und erst dort an dem Anschluss 6 mit diesem verbunden ist. Damit ist die Federrate des Stabilisatorteils 2 bei gleichem Querschnitt und sonstigem gleichem Aufbau kleiner im Vergleich mit einem Stabilisatorteil nach dem Stand der Technik, das sich auf gleiche Weise von dem dem Rad zugeordneten Anschluss zu einem dem Schwenkmotor zugeordneten Anschluss außerhalb des Gehäuseteils 1 erstreckt.

Der als Schwenkmotorantrieb ins Gehäuseteil 1 eingebaute Elektromotor ist so gestaltet, dass sich dessen Stator 8 und Rotor 9 mindestens teilweise um die zentrische Einstülpung 7 des Gehäuseteils 1 herum erstrecken, wobei der topfförmig ausgebildete Rotor 9 auf der zentrischen Einstülpung 7 des Gehäuseteils 1 über geeignete Lager 10, zum Beispiel Gleitlager, gelagert ist. Der Rotor 9 des Elektromotors ist innerhalb des an seinem Außenumfang mit dem Gehäuseteil 1 verbundenen, als Hohlzylinder ausgebildeten Stators 8 im Gehäuseteil 1 eingebaut. Dabei kann der Elektromotor vorteilhafterweise ein Innenläufermotor in Form eines Transversalflussmotors sein. Abweichend davon sind auch Außenläufermotor oder Radialflussmotor denkbar. Zur Wankregelung wird der Elektromotor bestromt, der dann sein Drehmoment an ein Schwenkmotorgetriebe abgibt.

Das Schwenkmotorgetriebe ist ein zweistufiges Planetengetriebe 11, dessen Antrieb über ein Sonnenrad 13 und dessen Abtrieb über einen Planetenradträger 14 erfolgt, der über den dem Schwenkmotor zugeordneten Anschluss 5 mit dem Stabilisatorteil 2' verbunden ist. Eine Verzahnung des durch den Elektromotor angetriebenen Sonnenrads 13 ist, in Längsrichtung gesehen, an einem Ende des Rotors 9 angebracht, das als Rotorlagerzapfen 16 fliegend in einem weiteren Gehäuseteil 12 gelagert ist. Rotorlagerzapfen 16, Rotor 9 und Sonnenrad 13 können einstückig oder mehrteilig ausgeführt sein.

Am Gehäuseteil 1 ist ein Sensor 3 zur Erfassung des Torsionswinkels des Stabilisatorteils 2 angebracht, dessen Geber 4 am Stabilisatorteil 2 fixiert ist. Der Sensor 3 liefert Messwerte, die zur Ansteuerung des Elektromotors, insbesondere über eine nicht gezeichnete Steuereinrichtung, verwendet werden. Dabei ermittelt die Steuereinrichtung aus den Messwerten des Sensors 3 dem am Stabilisatorteil 2 anliegenden Torsionsmoment entsprechende Werte.

## Patentansprüche

1. Geteilter Kraftfahrzeugstabilisator mit einem eingebauten Schwenkmotor zur Wankregelung, der mindestens aus einem Verstellantrieb aus Motor und Getriebe und aus einem Gehäuse besteht, wobei mindestens ein Gehäuseteil (1) mit einem dazugehörigen Stabilisatorteil (2) zur Drehmomentübertragung so verbunden ist, dass das Gehäuseteil (1) eine axial gerichtete, zentrische Einstülpung (7) besitzt, in die sich das Stabilisatorteil (2) im wesentlichen bis zu deren Ende hinein erstreckt und dass sich dort die Verbindung zur Drehmomentübertragung zwischen dem Gehäuseteil (1) und dem dazu gehörigen Stabilisatorteil (2) befindet, **dadurch gekennzeichnet, dass** am Gehäuseteil (1) ein Sensor (3) zur Erfassung des Torsionswinkels des Stabilisatorteils (2) angebracht ist, dessen Geber (4) am Stabilisatorteil (2) fixiert ist oder umgekehrt.

2. Geteilter Kraftfahrzeugstabilisator nach Anspruch 1, **dadurch gekennzeichnet, dass** der Sensor (3) Messwerte liefert, die zur Ansteuerung des Motors, insbesondere über eine Steuereinrichtung, verwendet werden.

3. Geteilter Kraftfahrzeugstabilisator nach Anspruch 2, **dadurch gekennzeichnet, dass** die Steuereinrichtung aus den Messwerten des Sensors (3) dem am Stabilisatorteil (2) anliegenden Torsionsmoment entsprechende Werte ermittelt.

4. Geteilter Kraftfahrzeugstabilisator nach Anspruch 1, **dadurch gekennzeichnet, dass** der Motor ein Elektromotor ist.

## Claims

1. A divided motor vehicle stabiliser with an incorporated pivot motor for roll regulation, which comprises at least an adjusting drive comprising a motor and transmission and of a housing, wherein at least one housing part (1) is connected to an associated stabiliser part (2) for torque transmission in such a way that the housing part (1) has an axially directed, central indentation (7), into which the stabiliser part (2) extends substantially up to the end thereof and in that the connection for torque transmission between the housing part (1) and the stabiliser part (2) associated therewith is located there, **characterised in that** attached to the housing part (1) is a sensor (3) for detecting the torsion angle of the stabiliser part (2), the encoder (4) of which is fixed on the stabiliser part (2) or vice versa.

2. A divided motor vehicle stabiliser according to claim 1, **characterised in that** the sensor (3) supplies measured values, which are used to activate the motor, more especially by means of a control device.

3. A divided motor vehicle stabiliser according to claim 2, **characterised in that** the control device determines values corresponding to the torsion torque applied to the stabiliser part (2) from the measured values of the sensor (3).

4. A divided motor vehicle stabiliser according to claim 1, **characterised in that** the motor is an electric motor.

## Revendications

1. Stabilisateur de véhicule automobile segmenté dans lequel est intégré un moteur oscillant pour permettre la régulation du roulis, constitué au moins d'une commande de réglage comprenant un moteur et une transmission et d'un carter, au moins une partie (1) du carter étant reliée à une partie de stabilisateur (2) associée pour permettre la transmission du couple de sorte que cette partie de carter (1) comporte une partie retournée centrale (7) dirigée radialement dans laquelle s'étend la partie de stabilisateur (2) essentiellement jusqu'à son extrémité, et, que la liaison pour permettre la transmission du couple entre la partie de boitier (1) et la partie de stabilisateur (2) associée se trouve à ce niveau,
**caractérisé en ce que**
sur la partie de boitier (1) est monté un capteur (3) pour permettre de détecter l'angle de torsion de la partie de stabilisateur (2) dont l'émetteur (4) est fixé sur la partie de stabilisateur (2) ou inversement.

2. Stabilisateur de véhicule automobile segmenté conforme à la revendication 1,
**caractérisé en ce que**
le capteur (3) fournit des valeurs de mesure qui sont utilisées pour la commande du moteur, en particulier par l'intermédiaire d'un dispositif de commande.

3. Stabilisateur de véhicule automobile segmenté conforme à la revendication 2,
**caractérisé en ce que**
le dispositif de commande détermine à partir des valeurs de mesure du capteur (3) la valeur correspondant au couple de torsion appliqué sur la partie de stabilisateur (2).

4. Stabilisateur de véhicule automobile segmenté conforme à la revendication 1,
**caractérisé en ce que**
le moteur est un moteur électrique.
